# EUROPEAN PATENT APPLICATION

(11) **EP 2 755 148 A1**
(43) Date of publication of application: **16.07.2014**
(21) Application number: 13151328.5
(22) Date of filing: 15.01.2013
(51) Int. Cl.: G06F 17/30

(54) **Data storage system, and program and method for execution in a data storage system**

(71) Applicant: FUJITSU LIMITED, Kawasaki-shi, Kanagawa 211-8588 (JP)
(72) Inventor: Carvalho, Nuno, London, Middlesex W5 4DW (GB); Matsutsuka, Takahide, London, W3 0JN (GB); Lee, Vivian, Bracknell, Berkshire RG42 2QP (GB)
(74) Representative: Hutchison, James

(57) **Abstract**

Embodiments include a data storage system comprising: a relational database storage apparatus configured to store a relational database comprising rows of relational data having an entry in each of a plurality of headed columns; a graph database storage apparatus configured to store a graph database including graph data related to the relational data, the graph database being encoded as triples; a query handler configured to receive a relational data query specifying a condition which defines a subset of one or more rows of relational data from which an entry is included in the query results; wherein the query handler is configured to generate a graph data query to search the graph database for graph data related to the subset of one or more rows of relational data.

## Description

The present invention lies in the field of data storage systems and querying techniques. In particular, the present invention lies in the field of transformation of data queries into more than one format of query, so that databases having different underlying data formats can be queried by a single query.

Database users or administrators may wish to extend the scope of data stored in an existing relational database by adding new columns or altering the schema in some other way. However, due to the rigid rules in schema extensibility, it may be that is actually either not possible or very difficult to do so. Therefore, graph databases such as RDF triple stores have been adopted as a means to extend the data stored in a relational database. The graph database enables data that are related to the data stored in the relational database to be stored without changing the underling schema of the relational database.

In particular, graph databases having their data encoded as RDF triples may be employed by database administrators as an extension to an existing relational database. The specification of Resource Description Framework (RDF)'s data model and XML syntax was published by W3C in 1999. While still being a relatively new concept, the RDF triple store that stores data entities composed of subject-predicate-object, are becoming more popular in recent years, due to the flexible data structure. A good application example is data integration in a enterprise environment, where majority of the data are stored in IT systems, e.g. accounting, CRM, HR. These systems are normally built with RDBMS (Relational Database Management System). However, there are also data on the internal networks that are not in any functional IT systems, e.g. documents in MS Word, MS Excel, HTML or PDF format, e.g. "non-searchable" data or even data stored in public libraries, that are related to the data stored in functional IT systems, but in different formats and/or locations.

A RDF triple store provides the best solution for these non-searchable data, which have close relationship with the data in the existing IT systems.

However, the data stored in the graph database are not searchable by a query formatted for the relational database.

Embodiments of the present invention include a data storage system comprising: a relational database storage apparatus configured to store a relational database comprising rows of relational data having an entry in each of a plurality of headed columns; a graph database storage apparatus configured to store a graph database including graph data related to the relational data, the graph database being encoded as triples; a query handler configured to receive a relational data query specifying a condition which defines a subset of one or more rows of relational data from which an entry is included in the query results; wherein the query handler is configured to generate a graph data query to search the graph database for graph data related to the subset of one or more rows of relational data.

Advantageously, embodiments of the present invention provide a mechanism for automatically extending the scope of a received database query querying a first database by generating an additional data query in a format suitable to query data stored in a database having a data format incompatible with the received database query. Thus, additional data can be searched in the query and the query results be more comprehensive than would be achieved by the received database query querying the first database alone. Consequently, applications or decision making processes dependent upon the query results are able to perform more informed decision making.

Specifically, embodiments of the present invention enable a query structured to obtain information from a relational database to be extended to obtain information related to the relational database results from a graph database. This has the advantage that data related to data stored in a relational database can be stored in a graph database, which has performance benefits, without needing to modify the underlying database schema of the relational database. Furthermore, that related data is automatically searched in response to a query addressed to the relational database.

In summary, embodiments of the present invention provide a mechanism for searching data which would otherwise be non-searchable by querying a relational database, the data being related to the data in the relational database. The mechanism checks a query in a format suitable for the relational database, generates a corresponding query, and forwards the corresponding query to the graph database (i.e. the underlying triple store) for execution. Results of both the relational database query and the graph database query are returned to the query source. Thus richer and more detailed information is accessible which would otherwise be impossible to query.

Optionally, in invention embodiments, each entry in the relational database corresponds to a node in the graph database, and data related to an entry in the relational database is represented in the graph database in a node linked to the node corresponding to the entry.

Advantageously, the graph database ontology defined by claim 2 provides a basis for making the additional information stored in the graph database but not in the relational database accessible to the query handler. That is to say, the encoding of graph data as triples means that the query handler can construct a graph data query which will follow predicate links from the node corresponding to a relational database entry in order to find related information in the graph database. The related data being represented in the graph database in a node includes that node defining an information type and a linked node storing a value of the information type. In terms of triples, if the query handler is provided with sufficient information to establish correspondences between entries in the relational database and nodes in the graph database, then it can simply query triples in the graph database having the node corresponding to an entry as the subject and values thereof.

As a further optional feature, it may that the rows of relational data in the relational database are indexed according to the values of their respective entries in a primary key column from among the headed columns; and the graph data in the graph database are structured according to an ontology in which a primary column resource corresponds to the primary key column, and predicates of the primary column resource denote links to further column resources corresponding to each of the other headed columns.

Advantageously, the primary key column provides a unique identifier for each row in the relational database, and thus by implementing an ontology in which a resource corresponding to the primary key column is a hierarchical root for all related information, the query handler can generate graph data queries which will return data relating to a selected subset of rows in the relational database.

In addition, it may be that the primary column resource and each of the further column resources have a value predicate which denotes a link to an object representing a value of the corresponding headed column.

Furthermore, in such embodiments, instances of the primary column resource and instances of the further column resources correspond to table entries, the values of which table entries are stored in the object linked to by the respective value predicate.

Advantageously, by having a node corresponding to the table entry as an instance of a resource with a value predicate, further related pieces of information can be stored as predicate-object pairs linking to the node. Simply including the value of a table entry as the object of a predicate corresponding to the headed column does not provide for further related information to be stored in the graph database.

Invention embodiments may further comprise a mapping unit configured to store: the name of the primary key column, in a form in which it is identified as the primary key column, in association with the name of the primary column resource; and, for each of the further headed columns, the name of the further headed column in association with the name of the corresponding column resource; wherein the query handler is configured to refer to the mapping unit to generate the graph data query.

Advantageously, the mapping unit stores information which, in certain implementations, enables the query handler to construct a graph data query. In particular embodiments, the mapping unit stores associations between relational database column headings and graph database resource names. Thus, the relational database column headings specified in the relational data query correspond to resource names in the graph database, and data related to entries in those relational database column headings are stored in triples which have instances of the corresponding resource name as subject. Accordingly, by informing the query handler of the resource names that correspond to the column headings specified in the relational data query, the query handler is able to construct a graph data query to search for related data in the graph database. The mapping unit may also store information representing the location of the graph database relevant to the relational database, in order to inform the query handler where to address the graph data query.

The mapping unit may be a storage location in a memory storing a mapping file or other stored form of the mapping information. The mapping unit may be provided as part of the query handler itself, as part of a management system/service for either the relational database or the graph database, or as an external component.

The relational data query can be in any format suitable for searching for and retrieving data from a relational database via an RDBMS, and may include either or both of a condition defining the rows from which data should be returned, and an indication of the column headings of the headed columns from which values of entries are to be returned in the query results. An exemplary format of such a query is an SQL statement. The graph data query can be in any format suitable for searching for and retrieving data from a graph database. Furthermore, since additional data is sought via the graph data query, it is beneficial for the query to include some sort of wildcard by which any triples storing properties or other data relating to a specified subject can be sought, and in turn, triples relating to those relating to the specified subject. An exemplary format of such a query is one or more SPARQL queries, possibly a nested SPARQL query. That is to say, in invention embodiments, it may be that the relational data query is an SQL statement and the graph data query is a SPARQL query. Furthermore, it may be that the relational data query also specifies from which of the headed columns entries should be included in the query results.

The query handler may be a standalone program or apparatus, or the query handler may be provided as a component of the database driver. Advantageously, embedding the query handler within the database driver of the relational database, for example, as a plugin program, ensures that the procedure performed by the query handler is as transparent as possible to the query source. The database driver may be, for example, a JDBC or ODBC. The process of generating and executing the graph data query is performed automatically in response to the relational data query being received at the database driver and the query results combined at the database driver, therefore the only way in which the query source is aware of the process having performed is by the receipt of additional query results. Thus, the present invention may be embodied as a plugin program installed inside a relational database management system (RDBMS)driver. The plugin program detects when a relational data query (e.g. an SQL statement) is issued to the RDBMS, retrieves information from the mapping unit (if required), generates a graph data query, and issues the graph data query to the graph database.

In invention embodiments, it may be that the relational data query also specifies from which of the headed columns entries should be included in the query results. Advantageously, such embodiments enable queries to be focussed on particular columns, and to return values of some entries in a row but not others.

Optionally, the query handler is configured, upon receipt of the relational data query, to refer to the mapping unit to obtain an identification of the primary key column of the relational database, and to obtain the values of the primary key column entries of the rows of the relational database satisfying the condition of the relational data query; and the query handler is configured to generate a graph data query requesting values of nodes linked to a subset of instances of the primary column resource having values matching the obtained values of the primary key column entries.

In embodiments of the present invention, the primary key column is represented in the graph database as the top of a hierarchy corresponding to a database row and its related data. Thus, data related to a particular row in the database can easily be searched and values of related data returned, as long as the value of the entry in the primary key column is known.

In fact, in order to reduce data traffic, the graph data query can be focussed on graph data corresponding to particular columns in the relational database and data related thereto. That is to say, it may be that the query handler is configured to refer to the mapping unit to identify the further column resources corresponding to the headed column entries specified in the relational data query, and the query handler is configured to include in the data graph query a request for the value of nodes which are instances of the identified column resources linked to the subset of instances of the primary column resource, and to include in the data graph query a request for all triples having those nodes as subject.

As a particular mechanism for obtaining the values of entries in the primary key column of data rows for which related data is sought in the graph database the query handler may be configured to obtain the values of primary key column entries of the rows of the relational database satisfying the condition of the relational data query by generating a further relational data query requesting the primary key column entry and specifying the same condition as the relational data query, and issuing the further relational data query to the relational database and receiving the results.

In embodiments of another aspect of the present invention, there is provided a method for execution in a data storage system comprising a relational database storage apparatus configured to store a relational database comprising rows of relational data having an entry in each of a plurality of headed columns, and a graph database storage apparatus configured to store a graph database including graph data related to the relational data, the graph database being encoded as triples. The method comprises: at a query handler, receiving a relational data query specifying a condition which defines a subset of one or more rows of relational data from which an entry is included in the query results, and generating a graph data query to search the graph database for graph data related to the subset of one or more rows of relational data.

The method may further comprise one or more of the following steps:
(at the query handler) issuing the relational data query to the relational database and receiving the results;
(at the query handler) issuing the graph data query to the graph database and receiving the results;
(at the query handler) collating the results from the graph data query and the relational data query;
(at the query handler) responding to the received relational data query with the collated results.

Embodiments of another aspect of the present invention include a computer program which, when executed by a computing apparatus, causes the computing apparatus to execute a method embodying the present invention.

Embodiments of a further aspect of the present invention include a suite of computer programs, which, when executed by computing apparatuses in a distributed computing environment, cause the computing apparatuses to function as a data storage system embodying the present invention.

Embodiments of another aspect of the invention include software which, when executed by a computer or a distributed network of computers, causes the computer or the distributed network of computers to become (or to function as) a data storage system embodying the invention. The distributed network of computers may include one or more storage units, which may also be distributed. The software may be a computer program or a suite of computer programs, which may be provided on a non-transitory storage medium.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Preferred features of the present invention will now be described, purely by way of example, with reference to the accompanying drawings, in which:-
Figure 1 is a schematic diagram of a system embodying the present invention;
Figure 2 is an exemplary component architecture of an embodiment of the present invention;
Figure 3 illustrates how a mapping file is compiled and information which may be stored in the mapping file;
Figure 4 illustrates a relational database in an invention embodiment;
Figure 5 illustrates an RDF Dataset in an invention embodiment;
Figure 6 illustrates an example of the processing performed by a plugin program embodying the present invention;
Figures 7a-7c illustrate exemplary SPARQL statements generated by a query handler embodying the present invention; and
Figure 8 illustrates a system architecture of a system embodying the present invention.

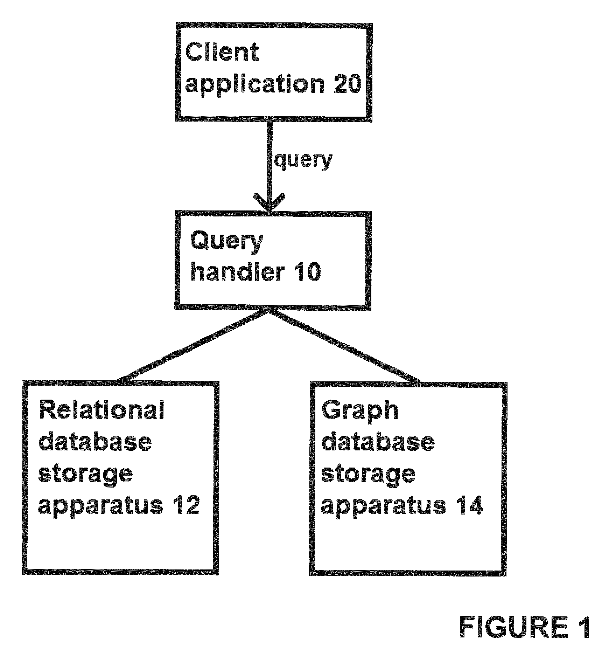

Figure 1 is a schematic diagram of a system embodying the present invention. A client application 20 is connected to a query handler 10 by a data communication connection. Queries can be submitted from the client application 20 to the query handler 10, and query results returned by way of a response to a query. The query handler 10 is connected to a relational database storage apparatus 12 and to a graph database storage apparatus 14 by data communication connections. Queries of a first format, suitable for querying a relational database stored on the relational database storage apparatus 12, are submitted from the query handler 10 to the relational database storage apparatus 12, and query results returned from the relational database storage unit 12 (or from a functional unit such as a database manager controlling the relevant database) in response to the query. Queries of a second format, suitable for querying a graph database stored on the graph database storage apparatus 14, are submitted from the query handler 10 to the graph database storage apparatus 12, and query results returned from the graph database storage unit 14 (or from a functional unit such as a database manager controlling the relevant database) in response to the query. The query submitted by the client application 20 to the query handler 10 is in a format suitable for querying a relational database.

The client application 20 is exemplary of a source of relational data query. In that context, any source of relational data query may be considered to be a client application', regardless of the form of the source.

The query handler 10 is a functional unit which may be provided in the form of software or hardware. The query handler 10 may be provided as part of a database management system, for example, it may be provided as part of a management system of the relational database stored on the relational database storage apparatus 12. Therefore, it may be that the query handler 10 is installed on a server or interconnected group of servers which also store the relational database. Alternatively, the query handler 10 may be a component of a database driver for the relational database, which driver is configured to interact with a management system of the relational database. Alternatively, the query handler 10 may be provided separately from a database driver for the relational database, but configured to intercept a relational data query bound for the database driver and intended to query the relational database stored on the relational database storage apparatus 12. The query handler is configured to receive a relational data query in a format suitable for querying a relational database, and transform the relational data query into one or more relational data queries in a format suitable for querying a relational database, and one or more graph data queries in a format suitable for querying a graph database. For example, the graph data is encoded as triples, such as RDF triples, so the graph data query/queries may be in a format suitable for querying an RDF triple store.

The query handler 10 may also provide the functionality to receive and integrate the query results from the relational data query and the graph data query, and to The relational database storage apparatus 12 is an apparatus configured to store a relational database comprising rows of relational data having an entry in each of a plurality of headed columns. The relational data format is an established form of data storage which can be queried by, for example, SQL (Structured Query Language) statements. The relational database storage apparatus 12 may be a server or a group of interconnected servers. The relational database storage apparatus 12 may also store, or have installed thereon, a relational database management system (RDBMS), which is configured to control access, modification, and storage to/of relational data stored in the relational database. The relational database storage apparatus 12, possibly via the RDBMS, is configured to receive relational data queries and to respond to them with query results. For example, a relational data query may specify a condition which, if fulfilled by data in a row in the relational database, denotes that data from that row are to be returned in the query results. Furthermore, the relational data query may specify the headed columns from which the values of entries in the rows fulfilling the condition are to be included in the query results.

The graph database storage apparatus 14 is an apparatus configured to store a graph database comprising of graph data encoded as triples, for example, RDF triples. The graph data format is an established form of data storage which can be queried by, for example, SPARQL (SPARQL Protocol and RDF Query Language) statements. The graph database storage apparatus 14 may be a server or a group of interconnected servers. The graph database storage apparatus 14 may also store, or have installed thereon, a graph database management system (GDBMS), which is configured to control access, modification, and storage to/of triples encoding the graph data. The graph database storage apparatus 14, possibly via the GDBMS, is configured to receive graph data queries and to respond to them with query results. For example, a graph data query may specify a range of RDF triples that should be returned as query results. For example, the graph data query may name a particular subject, and any triple having that named subject as its subject is included in the query results.

Data graphs, otherwise referred as graph databases, or graph datasets, provide a representation of semantic knowledge models. The data storage in embodiments of the present invention may be a database, for example, a graph database.

Graph databases represent a significant extension over relational databases by storing data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs.

Graph databases are used in a wide variety of different applications that can be generally categorized into two major types. The first type consists of complex knowledge-based systems that have large collections of class descriptions (referred to as "knowledge-based applications"), such as intelligent decision support and self learning. The second type includes applications that involve performing graph searches over transactional data (referred to as "transactional data applications"), such as social data and business intelligence. Many applications may represent both types. However, most applications can be characterized primarily as either knowledge-based or transactional data applications. Graph databases can be used to maintain large "semantic networks" that can store large amounts of structured and unstructured data in various fields. A semantic network is used as a form of knowledge representation and is a directed graph consisting of nodes that represent concepts, and arcs that represent semantic relationships between the concepts.

There are several approaches to encoding graph databases for storage. Graph data may be stored in memory as multidimensional arrays, or as symbols linked to other symbols. Another form of encoding is the use of "tuples," which are finite sequences or ordered lists of objects, each of a specified type. A tuple containing n objects is known as an "n-tuple," where n can be any non-negative integer greater than zero. A tuple of length 2 (a 2-tuple) is commonly called a pair, a 3 -tuple is called a triple, a four-tuple is called a quadruple, and so on.

The entity being described may be referred as the subject of the triple, the range of the identified property may be referred to as the object, and the relationship between the range and the entity may be referred to as the predicate. The triples provide for encoding of graph data (wherein graph data is exemplary of data stored in the data storage) by characterising the graph data as a plurality of subject-predicate-object expressions. In that context, the subject and object are graph nodes of the graph data, and as such are entities, objects, instances, or concepts (collectively 'graph resources'), and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance, range, or example, of that trait, characteristic, or aspect. In other words, a collection of triple statements intrinsically represents directional graph data. The RDF standard defines a formalised structure for such triples.

Graph data may be interpreted in a hierarchical fashion. For example, a subject node may be considered to be above an object node in a hierarchical structure.

Relational databases store data in rows and columns. The rows and columns compose tables that need to be defined before storing the data. The definition of the tables and the relationship between data contained on these tables is called a schema. A relational database uses a fixed schema.

The client application 20 issues a query to the relational database stored in the relational database storage apparatus 12. The query is in a format suitable for querying relational data, for example, an SQL statement, and thus shall be referred to as a relational data query. The query handler 10, which may be provided in the form of a plugin in the database driver for the relational database, receives the relational data query from the client application 20. The relational data query at least specifies a condition which, if satisfied by a row of data in the relational database, denotes that data from that row is to be included in the query results. That is to say, the values of entries in headed columns in rows satisfying the condition are to be read from the relational database and provided to the query handler 10 as query results. The relational data query may also specify from which headed columns values of entries should be read and included in the query results. The query handler 10 issues the relational data query to the relational database storage apparatus 12, or more specifically by a component thereof, such as a relational database stored on the apparatus, possibly via a relational database management system. The results are returned to the query handler 10 by the relational database storage apparatus 12 or by a component thereof.

In addition, the query handler is configured to generate a query for searching the graph database for data related to the data included in the results of the relational data query. The query so generated is in a format suitable for querying graph data, for example, suitable for querying an RDF triple store, and hence is referred to as a graph data query. For example, it may be that there is a primary key column in the relational database, and hence the ontology of the graph database stored on the graph database storage apparatus is such that a resource corresponds to the primary key column, and instances of the primary key column resource correspond to entries in the relational database, and have a value predicate linking to a value which is the same as the corresponding value of the corresponding entry in the relational database. Therefore, the values of the entries in the primary key column of rows whose data is included in the query results of the relational data query, can be used as a basis for searching the graph database for related data. That is to say, the graph database can be structured so that all data relating to entries in the relational database are linked to an instance of a primary key column resource having the same value as the corresponding entry in the relational database. Thus, the primary key columns acts as a unique identifier for identifying to which row in the relational database data in the graph database relates. The graph data query is issued to the graph database storage apparatus, or to a graph database stored thereon or its managements system, and the query results returned to the query handler 10.

The query handler 10 is configured to collate or aggregate the results from the relational data query and the graph data query and to return the collated/aggregated results to the client application 20.

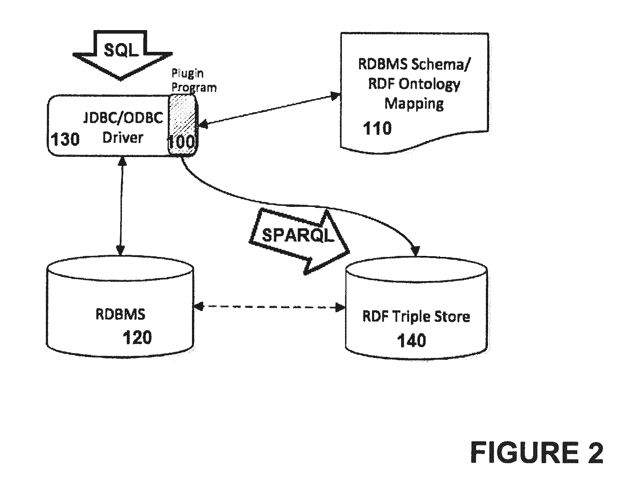

Figure 2 is an exemplary component architecture of an embodiment of the present invention. The component architecture of Figure 2 includes the following components:
- RDBMS 120, which is exemplary of the relational database storage apparatus mentioned elsewhere in this document, and specifically stores and manages a relational database (or more than one relational database).
- RDF Triple Store 140, which is exemplary of the graph database storage apparatus mentioned elsewhere in this document. The RDF triple store encodes graph data which is related to data stored in the relational database accessible via the RDBMS 120.
- RDBMS Schema and RDF Ontology Mapping 110, which is exemplary of the mapping unit mentioned elsewhere in this document. The RDBMS Schema/RDF Ontology Mapping 110 is illustrated as external to the plugin program 100, however, it may be included as part of the plugin program 100. The RDBMS Schema/RDF Ontology Mapping 110 may be a file or some other repository of stored information, which is accessible to and readable by the query handler 10.
- JDBC/ODBC Driver 130 is a driver software program which would ordinarily handle queries submitted to the relational database stored on the RDBMS 120. However, in the particular configuration of Figure 2, the database driver includes a plugin program 100, which is exemplary of the query handler 10 mentioned elsewhere in this document. The plugin program 100 actually intercepts the queries and performs processing to obtain query results on behalf of the JDBC/ODBC Driver 130.

The relational data query received at the plugin program 100 is in the form of an SQL statement, and hence is in a form suitable for querying the relational database stored on the RDBMS 120. The plugin program 100 is configured to generate a SPARQL query based on the relational data query in order to find data in the RDF triple store 140 related to the query results of the relational data query (SQL statement). The plugin program 100 is installed inside an RDBMS driver, which can be of any form, e.g. JDBC or ODBC, so that it detects SQL statements as they are received at the driver 130. The plugin program 100 is then configured to search the necessary information from the RDBMS Schema/RDF Ontology Mapping 110 in order that it can identify the resource names to search in the RDF Triple Store 140, and to identify the values of a primary key data column of rows retrieved in the relational data query results. The plugin program 100 is then configured to generate a SPARQL query which searches for data relating to (properties of) instances of a resource corresponding to the primary key data column which have values matching the values of the primary key data in rows retrieved in the relational data query results. The plugin program 100 is then configured to forward the generated SPARQL query to the RDF triple store 140.

The RDBMS Schema / RDF Ontology Mapping 110 stores (or may simply be) a mapping file which maps the RDBMS schema with the RDF ontology vocabulary. As a simple example, an RDBMS schema field is linked to an RDF class definition or statements, so that when a SQL statement is issued from a client application to the RDBMS 120 via the JDBC/ODBC driver 130, the plugin program 100 is able to refer to the RDBMS Schema/RDF Ontology Mapping 110 in order to obtain the information required to generate a SPARQL query which will look for RDF triple statements in the RDF triple store 140 which are relevant to the results of the SQL statement. It may be that the location (an address within a distributed computing environment or broader environment) of the RDF triple store 140 is also stored in the mapping file so that the plugin program 100 is able to access information identifying to where the SPARQL query should be issued.

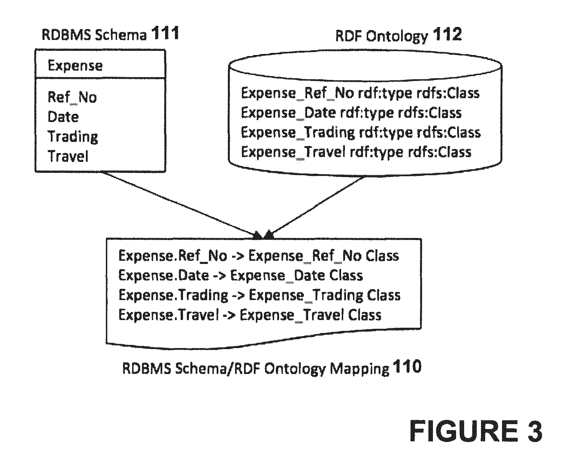

Figure 3 illustrates how a mapping file is compiled and information which may be stored in the mapping file. The RDBMS schema 111 and RDF Ontology 112 may or may not be stored in the mapping file, but are illustrated in Figure 3 to demonstrate the constituent components of the mapping file.

Data is stored in the RDF triple store 140 as instances of the RDF classes defined in the RDF ontology 112 and properties thereof. The RDBMS schema 111 gives the names of the headed columns of the relational database. A row in the relational database comprises an entry in each of the headed columns, and data is stored in the relational database as values of those entries.

The mapping file is represented as the RDBMS Schema/RDF Ontology Mapping 110. The RDBMS Schema/RDF Ontology Mapping 110 records the correspondences between headed columns in the RDBMS schema 111 and resource names in the RDF ontology 112. Graph data which relate to relational data in the relational database are stored in the RDF triple store as a property of an instance of the headed column to which the relational data belongs, as a property of an instance of a resource having a value corresponding to the entry of the row to which the relational data belongs in a headed column denoted as a primary key column (i.e. according to which the relational data rows are indexed).

In order to further illustrate the mapping method, an exemplary set of rules for mapping an RDBMS table into an RDF ontology and enabling related data to be stored in the RDF triple store will now be set out.

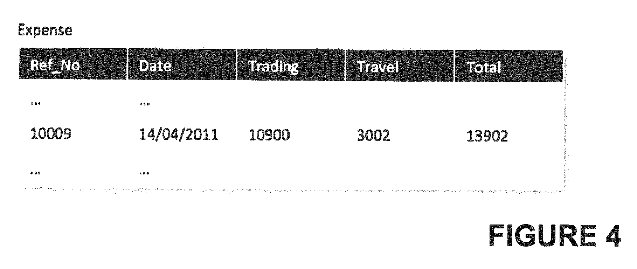

In the exemplary relational database of Figure 4, only one row of data is illustrated for simplicity. There are five headed columns: Ref_No; Date; Trading; Travel; and Total. The illustrated row of data has a value for its entry in each headed column. Ref_No is the primary key column - it is the headed column whose values are unique to each row, and by which the rows are indexed.

In the RDF ontology, each headed column from the relational database has a corresponding resource, named according to a naming convention. In this particular example the resources are named Expense_Ref_No, Expense_Date, Expense_Trading, and Expense_Travel. These are resources in the RDF ontology, hence they are defined in the RDF ontology as rdf types or Classes as follows:
Expense_Ref_No rdf:type rdfs:Class
Expense_Date rdf:type rdfs:Class
Expense_Trading rdf:type rdfs:Class
Expense_Travel rdf:type rdfs:Class

The naming convention employed in this example is that the name of the class should follow the combination of table name plus column name separated by an underscore. This avoids confusion where there are duplicated column names in different tables.

In addition, the Class corresponding to the primary key column, in this case Expense_Ref_No, has predicates including links to the Classes corresponding to the other column headings. Therefore the class corresponding to the primary key column becomes the root of a hierarchy representing a row in the relational database.

In this particular example, Expense_Ref_No rdf:type rdfs:Class
should have at least the following predicates:
has_date
has_trading
has_travel
has_total.

Finally, each column resource has a *has_value* predicate, and each instance of the resource corresponds to an entry in the corresponding headed column in the relational database, and the object linked to by the *has_value* predicate is an object having a value reflecting the value of the corresponding entry. For example, travel_111 is an instance of the Expense_Travel class, which has a predicate has_value linking to an object having the value "3002". The instance is referenceable via the corresponding Expense_Ref_No instance, to which travel_111 is linked and hence travel_111 and the value "3002" are properties of the instance of the Expense_Ref_No class having the corresponding value of Ref_No.

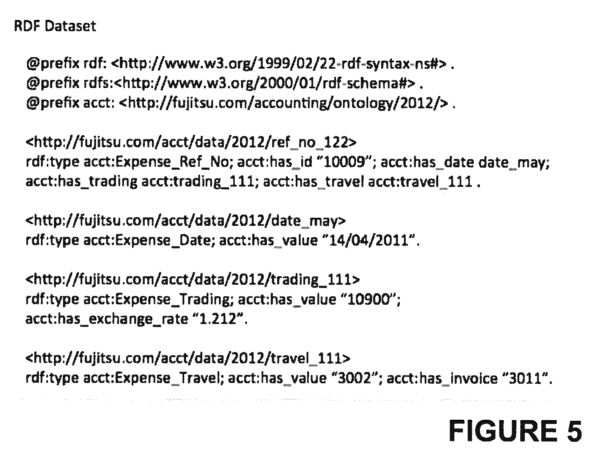

Figure 5 illustrates an RDF Dataset conforming to the exemplary rules set out above. It can be seen that data relating to the row of data illustrated in Figure 4 is stored in the RDF dataset. For example, the exchange rate which was used to calculate the value of the entry in the column headed 'Trading' is given as a property of the instance of the resource corresponding to the entry in the Trading column. Furthermore, an invoice number relating to the entry in the Travel column is given as a property of the resource corresponding to the entry in the Travel column.

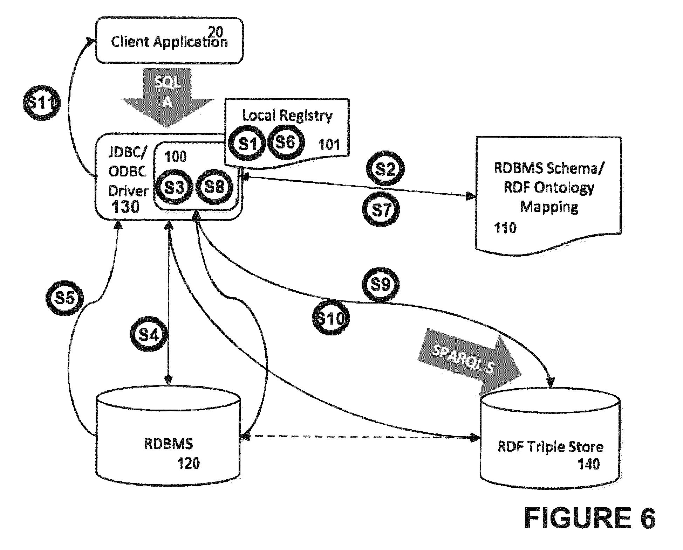

Figure 6 illustrates an example of the processing performed by a plugin program embodying the present invention. The process is illustrated overlaid on a component architecture corresponding to that of Figure 2, in order to demonstrate the transfer of information between components.

In addition to the component architecture of Figure 2, the component architecture onto which the process of Figure 6 is overlaid includes a local registry 101 as a component of the plugin program 100. The local registry 101 is a storage location accessible to the plugin program 100 in which data relevant to a process being executed by the plugin program can be stored on a temporary or more permanent basis.

The process is initiated by the receipt of an SQL query A from a client application 20. The SQL statement A is in a format suitable for querying the relational database stored in the RDBMS 120.

At step S1, the plugin program 100 receives (intercepts) the SQL query A and logs it into the local registry 101.

In the exemplary data illustrated by Figures 3-5 and their associated descriptions, an example of the SQL query A is as follows (this shall be referred as the "illustrated data example" for the purposes of this discussion):
SELECT e.Trading, e.Travel FROM Expense as e
WHERE e.Date="May_2012";.

At step S2, the plugin program 100 sends a message to the mapping unit 110 to identify which of the headed columns in the relational database or relational database table being queried by SQL query A is the primary key column. The mapping unit 110 responds with information identifying the name of the primary key column in the relevant database or database table.

In terms of the illustrated data example, the information returned at Step S2 may take the form of something similar to the following:
Primary Key P = Ref_No.

The SQL query A includes a condition which determines from which rows data is included in the query results. At step S3, the plugin program 100 generates a further relational data query B, which may also be in the form of an SQL statement/query. The further relational data query B includes the same condition as SQL query A, but specifically requests the values of entries in the primary key column.

In terms of the illustrated data example, the further relational data query B may take the following form:
SELECT e.Ref_No FROM Expense as e
WHERE e.Date = "May_2012";.

At step S4, the SQL query A and the further relational data query B are issued to the RDBMS 120. At step S5, the results R_{A} of SQL query A are returned to either the JDBC/ODBC driver 130 or to the plugin program 100. At step S6, the results R_{B} of further relational data query B are returned to the plugin program 100 and logged in the local registry 101.

In terms of the illustrated data example, the results R_{A} may be:
R_{A} = Trading value: 10900, Travel value: 3002;
and the results R_{B}:
R_{B} = "10009".

The SQL query A includes a select clause specifying from which of the headed columns data should be read from table entries in rows fulfilling the condition. At step S7, the plugin program 100 sends a message to the mapping unit 110 to request the names of the classes in the RDF ontology governing data in the RDF triple store 140 that correspond to the headed columns specified in the SQL query A. For simplicity, the set of one or more names returned by the mapping unit in response to the message shall be referred to as M.

In the illustrated data example, the information provided by the mapping unit 110 may be as follows:
Expense.Trading -> Expense_Trading
Expense.Travel -> Expense_Travel.

At step S8, the plugin program 100 generates a graph data query such as a SPARQL query, which shall be referred to as S, which includes M in a select clause and values of the class corresponding to the primary key column matching those in R_{B} as a condition filter. The query S may request all properties of the class instances specified in the query.

In the illustrated data example, the SPARQL query S can be generated as a single nested SPARQL query, however, here it is explained in terms of three separate queries for simplicity of explanation.

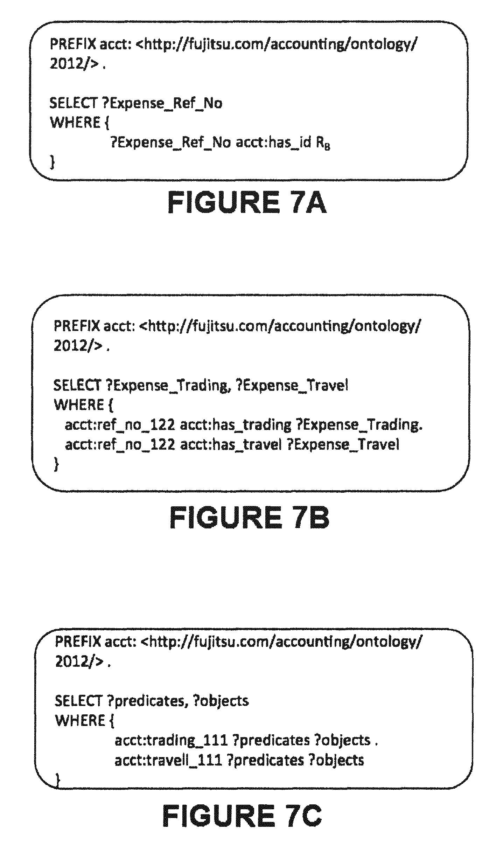

Firstly, in order to find the instance of Expense_Ref_No which contains R_{B} (this should return acct:ref_no_122 instance), the SPARQL query in Figure 7a is used.

Secondly, the SPARQL query of Figure 7b is used in order to find all the *Expense_Travel* and *Expense_Trading* instances from the RDF store where *Expense_Ref_No = acct:ref_no_122.* The return result of this SPARQL query should be: *acct:trading_111* and *acct:travel_111.*

Thirdly, the SPARQL query of Figure 7c is used in order to find all the *predicates* and objects where *subjects* are *acct:trading_111* and *acct:travel_111.*

At step S9 the SPARQL query S is issued to the RDF triple store 140, possibly using location information identifying the RDF triple store 140 corresponding to the relational database 120 to which the SQL query A was addressed.

At step S10, the results R_{C} of SPARQL query S are returned to the plugin program 100. At step S11, the results R_{A} and R_{C} are combined by the plugin program and returned to the client application 20.

In terms of the illustrated data example, the combined results of the whole SQL query execution include:
R_{A}= Trading value: 10900, Travel value: 3002
R_{C} = Trading has_exchange_rate: 1.212; Travel has_invoice: 3011
Note: the two result sets can also be returned separately from the respective databases.

Therefore, the mechanism embodying the present invention enables additional information to be accessed which would not be available as part of the conventional SQL query result set, for example:
From RDBMS the returned result set is:
   R_{A} = Trading value: 10900, Travel value: 3002

Whereas from the RDF triple store the extra information of:
Trading where has_value 10009, also has_exchange_rate: 1.212
Travel where has_value 3002, also has_invoice: 3011
is returned in response to the query.

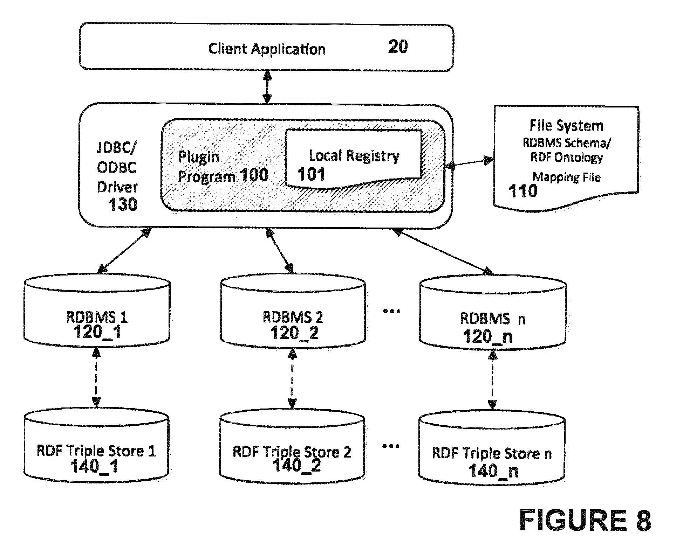

Figure 8 illustrates a system architecture of a system embodying the present invention. The system architecture of Figure 8 is similar to that of previous examples, and like reference numerals have been used for like components, and description of those components shall be omitted.

In the system architecture of Figure 8, it is illustrated that more than one relational database (120_1, 120_2, 120_n) may be accessed via the same JDBC/ODBC driver 130. Furthermore, each of the relational databases (120_1, 120_2, 120_n) has a corresponding graph database (140_1, 140_2, 140_n), which store data relating to data in the corresponding relational database as RDF triples. Thus, the plugin program 100 is configured to receive SQL queries for any of the relational databases (120_1, 120_2, 120_n), and to generate a SPARQL query to find related data in the corresponding graph database (140_1, 140_2, 140_n). In addition, the mapping unit 110 includes more than one mapping file: one for each corresponding pair of databases.

## Claims

1. A data storage system comprising:
a relational database storage apparatus configured to store a relational database comprising rows of relational data having an entry in each of a plurality of headed columns;
a graph database storage apparatus configured to store a graph database including graph data related to the relational data, the graph database being encoded as triples;
a query handler configured to receive a relational data query specifying a condition which defines a subset of one or more rows of relational data from which an entry is included in the query results; wherein
the query handler is configured to generate a graph data query to search the graph database for graph data related to the subset of one or more rows of relational data.

2. A data storage system according to claim 1, wherein
each entry in the relational database corresponds to a node in the graph database, and data related to an entry in the relational database is represented in the graph database in a node linked to the node corresponding to the entry.

3. A data storage system according to claim 1 or 2, wherein
the rows of relational data in the relational database are indexed according to the values of their respective entries in a primary key column from among the headed columns; and
the graph data in the graph database are structured according to an ontology in which a primary column resource corresponds to the primary key column, and predicates of the primary column resource denote links to further column resources corresponding to each of the other headed columns.

4. A data storage system according to claim 3, wherein the primary column resource and each of the further column resources have a value predicate which denotes a link to an object representing a value of the corresponding headed column.

5. A data storage system according to claim 4, wherein
instances of the primary column resource and instances of the further column resources correspond to table entries, the values of which table entries are stored in the object linked to by the respective value predicate.

6. A data storage system according to any of claims 3 to 5, further comprising:
a mapping unit configured to store: the name of the primary key column, in a form in which it is identified as the primary key column, in association with the name of the primary column resource; and, for each of the further headed columns, the name of the further headed column in association with the name of the corresponding column resource; wherein
the query handler is configured to refer to the mapping unit to generate the graph data query.

7. A data storage system according to any of claims 1 to 6, wherein the relational data query is an SQL statement and the graph data query is a SPARQL query.

8. A data storage system according to any of claims 1 to 7, further comprising a database driver for the relational database, wherein
the query handler is provided as a component of the database driver.

9. A data storage system according to any of claims 1 to 8, wherein the relational data query also specifies from which of the headed columns entries should be included in the query results.

10. A data storage system according to any of claims 1 to 9, wherein
the query handler is configured, upon receipt of the relational data query, to refer to the mapping unit to obtain an identification of the primary key column of the relational database, and to obtain the values of the primary key column entries of the rows of the relational database satisfying the condition of the relational data query; and
the query handler is configured to generate a graph data query requesting values of nodes linked to a subset of instances of the primary column resource having values matching the obtained values of the primary key column entries.

11. A data storage system according to claim 10, wherein
the query handler is configured to refer to the mapping unit to identify the further column resources corresponding to the headed column entries specified in the relational data query, and
the query handler is configured to include in the data graph query a request for the value of nodes which are instances of the identified column resources linked to the subset of instances of the primary column resource, and to include in the data graph query a request for all triples having those nodes as subject.

12. A data storage system according to claim 10 or 11, wherein
the query handler is configured to obtain the values of primary key column entries of the rows of the relational database satisfying the condition of the relational data query by generating a further relational data query requesting the primary key column entry and specifying the same condition as the relational data query, and issuing the further relational data query to the relational database and receiving the results.

13. A method for execution in a data storage system comprising a relational database storage apparatus configured to store a relational database comprising rows of relational data having an entry in each of a plurality of headed columns, and a graph database storage apparatus configured to store a graph database including graph data related to the relational data, the graph database being encoded as triples;
the method comprising:
at a query handler, receiving a relational data query specifying a condition which defines a subset of one or more rows of relational data from which an entry is included in the query results, and generating a graph data query to search the graph database for graph data related to the subset of one or more rows of relational data.

14. A computer program which, when executed by a computing apparatus, causes the computing apparatus to execute the method according to claim 13.

15. A suite of computer programs, which, when executed by computing apparatuses in a distributed computing environment, cause the computing apparatuses to function as the data storage system according to any of claims 1 to 12.
